# EUROPEAN PATENT SPECIFICATION

(11) **EP 2 533 886 B1**
(45) Date of publication and mention of the grant of the patent: **11.04.2018**
(21) Application number: 11708601.7
(22) Date of filing: 07.02.2011
(51) Int. Cl.: B01F 17/00, C01F 7/06

(54) **WATER-IN-OIL EMULSION COMPOSITIONS AND METHODS FOR MAKING AND USING THE SAME**
WASSER-IN-ÖL-EMULSIONSZUSAMMENSETZUNG SOWIE VERFAHREN ZU IHRER HERSTELLUNG UND VERWENDUNG
COMPOSITIONS D'ÉMULSION D'EAU DANS L'HUILE ET LEURS PROCÉDÉS D'ÉLABORATION ET DE MISE EN OEUVRE

(30) Priority: 12.02.2010 US 303972 P
(43) Date of publication of application: 19.12.2012
(73) Proprietor: Cytec Technology Corp., Wilmington, DE 19801 (US)
(72) Inventor: CHEN, Haunn-Lin, (Tony), Darien, CT 06820 (US); CYWAR, Douglas A., Danbury, CT 06810 (US); DAVIS, Matthew J., Milford, CT 06460 (US); LEWELLYN, Morris, Stratford, CT 06614 (US)
(74) Representative: Vande Gucht, Anne
(86) International application number: PCT/US2011/023866
(87) International publication number: WO 2011/100183

(56) References cited:
- GB-A- 2 315 757
- US-A- 4 698 178
- US-A- 5 883 181
- US-A1- 2008 257 827

## Description

### Field

This invention relates to water-in-oil emulsion compositions. More particularly, this invention relates to water-in-oil emulsion compositions having silicon-containing polymers for use in processes for the production of alumina.

### Background

Bauxite is the basic raw material for almost all manufactured aluminum compounds. In the course of production of aluminum compounds, bauxite can be refined to aluminum hydroxide by the Bayer process, the Sinter process, and combinations thereof. Bauxites are typically classified according to their main mineralogical constituents as gibbsitic, boehmitic and diasporic. The mineralogical composition of bauxite can impact the method of processing.

During the Bayer process for the production of alumina from bauxite, the bauxite ore is digested at high temperature and pressure with caustic solution, *i.e.,* sodium hydroxide (NaOH), to obtain supersaturated sodium aluminate solutions (commonly referred to as "supersaturated green liquor") containing insoluble impurities that remain in suspension. When the bauxite contains mainly gibbsite, the extraction of alumina from bauxite can be achieved in the temperature range of 100 to 150°C. However, if the bauxite contains mainly boehmite or diaspore, the extraction of alumina becomes more difficult, requiring temperatures greater than 200°C. Furthermore, it is well known that the addition of lime during the digestion of boehmitic or diasporic bauxite can improve alumina recovery.

The Sinter process is an alternative or an adjuvant to the Bayer process, which is commonly used for the treatment of high silica containing bauxites. In the Sinter process, the bauxite (or Bayer "red mud") is calcined at 1200°C with soda and/or lime prior to leaching with NaOH solution, which generates sodium aluminate liquor (also commonly referred to as "supersaturated green liquor") and insoluble "sinter mud."

The insoluble residues, *i.e*., the suspended solids, generated during the processes for producing alumina include iron oxides, sodium aluminosilicates, calcium aluminosilicates, calcium titanate, titanium dioxide, calcium silicates and other materials. The bauxite mineralogy and chemical additives added during processing have an effect on the solid phases present. The process of separating suspended solids from the supersaturated green liquor near its boiling point is known as "clarification".

In the clarification stage, the coarser solid particles are generally removed with a "sand trap" cyclone. To separate the finer solid particles from the liquor, the slurry is normally fed to the center well of a mud settler where it is treated with a flocculant composition that may be based on a variety of flocculating agents including starch, flour, polyacrylate salt polymer, acrylate salt/acrylamide copolymer, and/or water-soluble polymers containing pendant hydroxamic acid or salt groups. As the mud settles, clarified green liquor overflows a weir at the top of the mud settling tank and is passed to subsequent processing steps.

At this point, the Sinter process often requires another step where a desilication additive such as lime is added to the green liquor to remove soluble silica species from the liquor. The slurry is treated with flocculants and fed to a desilication settler to remove insoluble desilication products that include sodium aluminosilicates and calcium aluminosilicates.

The settled solids from the flocculation procedure, known as mud, are withdrawn from the bottom of the mud settler and passed through a countercurrent washing circuit for recovery of sodium aluminate and soda. Depending on the level of silicates and titanium-containing oxides in the bauxite, the red mud and/or aluminate liquor may contain sodium aluminosilicates, calcium silicates, calcium aluminosilicates, calcium titantates and titanium dioxide. These insoluble materials often referred to as desilication products (DSP) may remain suspended in the red mud and/or aluminate liquor.

In the clarification step, the suspended solids are preferably separated at a relatively fast rate if the overall process is to be efficient. Efficient removal of suspended solids from process streams in processes to produce alumina has been addressed in a variety of manners, including, but not limited to: employing polyacrylates as flocculants; using combinations of polyacrylates and starch in Bayer alumina recovery circuits; using polyacrylamide within the mud settler; treating different stages in the Bayer alumina recovery circuit with different flocculant compositions; removing suspended solids from Bayer alumina process streams by contacting and mixing a Bayer process stream with hydroxamated polymers; and using blends of hydroxamated polymer emulsions with polyacrylate emulsions to remove suspended solids from Bayer alumina process streams. Silicon-containing polymers have been disclosed for water clarification. Examples include, but are not limited to: silicon-containing aminomethylphosphonates to flocculate suspended solids in water; copolymers of diallydimethylammonium halide and a vinyltrialkoxysilane as a coagulant used in demulsification of oily waste waters, dewatering of mineral slurries, and clarification of waste waters; and vinyltrialkoxysilanes as cross-linking agents to modify structure of nonionic, cationic and anionic water-soluble polymers and the use of the structurally-modified polymers as flocculating agents. Silicon-containing polymers are also used to control aluminosilicate scale.

US 2008/0257827 describes the use of aqueous solutions of silicon-containing polymers to improve red mud flocculation in the Bayer process.

GB2315757A discloses water-in-oil emulsions containing a silicone polymer and a surfactant, and discloses a process for making a water-in-oil emulsion by forming a premix containing a silicone polymer and a surfactant to which an aqueous solution is added. US4698178A discloses water-in-oil emulsions containing a silicone polymer and surfactant. The disclosed polyoxyalkylene-polysiloxane copolymers are defined by a formula showing trimethylsilyl end groups and recurring unit groups with indices n, m, and o, none of which groups having-Si(OR)₃ groups as the ones claimed in independent claims 1, 5, and 14 of the present patent.

US5883181A discloses a method of flocculating suspended solids by adding a multimodal inverse emulsion (cf column 4, line 35-65, claims). The emulsion may contain silicone polymers (cf column 12, lines 39-64).

It has now been discovered that flocculation of suspended solids, especially calcium silicate, calcium aluminosilicate, calcium titanate and titanium dioxide particles, from processes for to produce alumina, in particular Bayer and/or Sinter process streams, may be obtained by adding and efficiently mixing a water-in-oil emulsion flocculant composition having a silicon-containing polymer into the process stream alone or subsequent to, followed by or in association with, a conventional flocculant. The treatment is typically, but not always, done preceding the step in the process for settling mud and can significantly reduce the need for filtration. Since the suspended solids may contain undesirable impurities, the reductions in suspended solids achieved by practice of the present invention may also result in improved purity of the resultant alumina product. It has been discovered that the water-in-oil emulsions containing polymers having a high silane content can be prepared. The water-in-oil emulsions have lower freezing points as compared to known solutions and therefore stay liquid and usuable at lower temperatures. It has further been found that the water-in-oil emulsions of silane-containing polymers can be easily blended in any ratio by simple mixing with emulsions of anionic polymers, such as polyacrylates and/or hydroxamated polyacrylamides.

### Summary

One aspect described herein is a method of making a water-in-oil emulsion composition, the method comprising: forming an aqueous solution comprising a silicon-containing polymer comprising an -Si(OR)₃ group, wherein R is independently selected from the group consisting of hydrogen, C₁₋₂₀ alkyl, C₂₋₂₀ alkenyl, C₆₋₁₂ aryl, C₇₋₂₀ aralkyl, a group I metal ion, a group II metal ion, and NR'₄⁺; wherein R' is independently selected from the group consisting of hydrogen, C₁₋₂₀ alkyl, C₂₋₂₀ alkenyl, C₆₋₁₂ aryl, and C₇₋₂₀ aralkyl; and wherein R and R' are independently unsubstituted or hydroxy-substituted; and intermixing the aqueous solution with a surfactant and oil to form a water-in-oil emulsion composition including the silicon-containing polymer.

Another aspect described herein is a water-in-oil emulsion composition comprising a silicon-containing polymer comprising an -Si(OR)₃ group, wherein R is independently selected from the group consisting of hydrogen, C₁₋₂₀ alkyl, C₂₋₂₀ alkenyl, C₆₋₁₂ aryl, C₇₋₂₀ aralkyl, a group I metal ion, a group II metal ion, and NR'₄⁺; wherein R' is independently selected from the group consisting of hydrogen, C₁₋₂₀ alkyl, C₂₋₂₀ alkenyl, C₆₋₁₂ aryl, and C₇₋₂₀ aralkyl; and wherein R and R' are independently unsubstituted or hydroxy-substituted, the composition manufactured by intermixing an aqueous solution comprising the silicon-containing polymer with a surfactant and oil to obtain the water-in-oil emulsion composition.

Yet a further aspect described herein is a flocculation method comprising: intermixing a flocculant polymer provided by the water-in-oil emulsion composition as described above with a process stream in a process for producing alumina, the flocculant polymer intermixed in an amount effective to flocculate at least a portion of solids suspended therein, wherein the suspended solids are selected from the group consisting of red mud, sodium aluminosilicates, calcium silicates, calcium aluminosilicates, titanium oxides and mixtures thereof.

Yet another aspect described herein is a water-in-oil emulsion composition comprising a silicon-containing polymer having at least 8% of monomeric units including an -Si(OR)₃ group wherein R is independently selected from the group consisting of hydrogen, C₁₋₂₀ alkyl, C₂₋₂₀ alkenyl, C₆₋₁₂ aryl, C₇₋₂₀ aralkyl, a group I metal ion, a group II metal ion, and NR'₄⁺; wherein R' is independently selected from the group consisting of hydrogen, C₁₋₂₀ alkyl, C₂₋₂₀ alkenyl, C₆₋₁₂ aryl, and C₇₋₂₀ aralkyl; and wherein R and R' are unsubstituted or hydroxy-substituted.

These and other aspects are described in greater detail below.

### Detailed Description

The following description and examples illustrate multiple embodiments of the present invention in detail. Those of skill in the art will recognize there are numerous variations and modifications of this invention that are encompassed by its scope. Accordingly, the description of the embodiments herein should not be deemed to limit the scope of the present invention.

It has now been found that various silicon-containing polymers are useful as flocculants for suspended solids in process streams of processes for producing alumina, such as the Bayer process and the Sinter process.

One embodiment includes a water-in-oil composition containing a silicon-containing polymer. Water-in-oil emulsions (also referred to as "inverse emulsions") include a cationic, anionic or nonionic silicon-containing polymer in an aqueous phase, a hydrocarbon oil (hereinafter referred to as "oil") for the oil phase and an emulsifying agent (hereinafter referred to as a "surfactant"). The water-in-oil emulsions described herein are oil continuous and include a silicon-containing polymer dissolved in the dispersed aqueous particles of the emulsion. The inverse emulsions are "inverted" or activated for use by releasing the polymers from the particles by shear, dilution or another surfactant (referred to as an "inverting surfactant"). See U.S. Patent No. 3,734,873, which describes inversion. The silicon-containing polymer is generally configured to enhance flocculation of suspended solids in a process for digesting Bauxite ore. Examples of silicon-containing polymers include polymers having pendant silane groups, e.g., silicon-containing pendant groups, of the Formula (I) attached thereto:

-Si(OR)₃ (I)

wherein each R is independently hydrogen, C₁₋₂₀ alkyl, C₂₋₂₀ alkenyl, C₆₋₁₂ aryl, C₇₋₂₀ aralkyl, a group I metal ion, a group II metal ion, or NR'₄⁺; where each R' is independently hydrogen, C₁₋₂₀ alkyl, C₂₋₂₀ alkenyl, C₆₋₁₂ aryl, and C₇₋₂₀ aralkyl; and where R and R' are each independently unsubstituted, or hydroxy-substituted. Examples of R groups include lower alkyl groups, e.g., C₁₋₆ alkyl groups and C₁₋₃ alkyl groups; phenyl, benzyl, Na⁺, K⁺, and NH₄⁺.

In some embodiments, the -Si(OR)₃ group, i.e., Formula I, is a trimethoxysilane group (R = methyl) or a triethoxysilane group (R = ethyl). Other alkyl groups can also be advantageously employed as R in Formula (I). The term "alkyl," as used herein is a broad term and is used in its ordinary sense, including, without limitation, to refer to a straight chain or branched, noncyclic or cyclic, saturated aliphatic hydrocarbon containing from one, two, three, four, five, six, seven, eight, nine, or ten carbon atoms, while the term "lower alkyl" has the same meaning as alkyl but contains one, two, three, four, five, or six carbon atoms. Representative saturated straight chain alkyl groups include methyl, ethyl, n-propyl, n-butyl, n-pentyl, n-hexyl, and the like. Examples of saturated branched alkyl groups include isopropyl, *sec*-butyl, isobutyl, *tert*-butyl, isopentyl, and the like. Representative saturated cyclic alkyl groups include cyclopropyl, cyclobutyl, cyclopentyl, cyclohexyl, -CH₂cyclopropyl, -CH₂cyclobutyl, -CH₂cyclopentyl, -CH₂cyclohexyl, and the like. Cyclic alkyl groups may also be referred to as "homocyclic rings" and include di- and poly-homocyclic rings such as decalin and adamantane.

Unsaturated alkyl groups contain at least one double or triple bond between adjacent carbon atoms (referred to as an "alkenyl" or "alkynyl," respectively). Representative straight chain and branched alkenyl groups include ethylenyl, propylenyl, 1-butenyl, 2-butenyl, isobutylenyl, 1-pentenyl, 2-pentenyl, 3-methyl-1-butenyl, 2-methyl-2-butenyl, 2, 3-dimethyl-2-butenyl, and the like. Representative straight chain and branched alkynyl groups include acetylenyl, propynyl, 1-butynyl, 2-butynyl, 1-pentynyl, 2-pentynyl, 3-methyl-1 butynyl, and the like. Representative unsaturated cyclic alkyl groups include cyclopentenyl and cyclohexenyl, and the like.

While unsubstituted alkyl, alkenyl and alkynyl groups are generally suitable, substituted alkyl, alkenyl and alkynyl groups can also be advantageously employed.

In certain embodiments, R can be or include an aryl group. The term "aryl" as used herein is a broad term and is used in its ordinary sense, including, without limitation, to refer to an aromatic carbocyclic moiety such as phenyl or naphthyl, as well as aralkyl and alkylaryl moieties. The term "aralkyl" as used herein is a broad term and is used in its ordinary sense, including, without limitation, to refer to an alkyl having at least one alkyl hydrogen atom replaced with an aryl moiety, such as benzyl, -CH₂(1 or 2-naphthyl),-(CH₂)₂phenyl, -(CH₂)₃phenyl, -CH(phenyl)₂, and the like. The term "alkylaryl" as used herein is a broad term and is used in its ordinary sense, including, without limitation, to refer to an aryl having at least one aryl hydrogen atom replaced with an alkyl moiety. Particularly preferred aryl groups include C₆₋₁₂ aryl and C₇₋₂₀ aralkyl groups.

While unsubstituted alkyl or aryl groups are generally preferred, in certain embodiments substituted alkyl or aryl groups can advantageously be employed. The term "substituted," as used herein is a broad term and is used in its ordinary sense, including, without limitation, to refer to any of the above groups (e.g., alkyl, aryl) wherein at least one hydrogen atom is replaced with a substituent. In the case of a keto substituent ("-C(=O)-") two hydrogen atoms are replaced. When substituted, "substituents," within the context of preferred embodiment, include halogen, hydroxy, cyano, nitro, sulfonamide, carboxamide, carboxyl, ether, carbonyl, amino, alkylamino, dialkylamino, alkoxy, alkylthio, haloalkyl, and the like. Alternatively, one or more of the carbon atoms of the R group can be substituted by a heteroatom, e.g., nitrogen, oxygen, or sulfur.

In one embodiment, the -Si(OR)₃ group is attached as a pendant group to the backbone of the silicon-containing polymer. The pendant -Si(OR)₃ group can be bonded directly to an atom (e.g., a carbon atom) in the backbone of the silicon-containing polymer, or to the backbone of the polymer through a suitable linking group. Examples of linking groups include fully saturated linear C₁₋₆ alkyl chains, as well as alkyl chains with ether linkages (e.g., alkoxy or poly(alkoxy) linking groups). Other linking groups include alkyl chains with amide linkages and hydroxy substituents, for example:

-C(=O)(NH)CH₂CH₂CH₂-

-NHCH₂CHOHCH₂OCH₂CH₂CH₂-

-NHC(=O)NHCH₂CH₂CH₂-

In an embodiment, the -Si(OR)₃ group is included on or attached to the polymer backbone and/or any suitable portion of the polymer (e.g., as an end group, on a grafted portion or side chain, or the like). In certain embodiments of the silicon-containing polymer, it can be desirable to include other pendant groups in addition to the -Si(OR)₃ group. Examples of other pendant groups include carboxylate groups such as -C(=O)O⁻ or -C(=O)OH, amide groups such as -C(=O)NR'R" where R' and R" , each independently, can be H, alkyl or alkenyl, hydroxamated groups such as -C(=O)NHO⁻, and amine groups such as NH₂. Other pendant groups can also be employed, as will be appreciated by one of skill in the art.

In some embodiments, the backbone of the silicon-containing polymer includes substituted ethylene recurring units, e.g., -[CH₂C(R^{x})H]-, wherein R^{x} comprises a -Si(OR)₃ group with or without a linking group as described elsewhere herein, or another pendant substituent. A single kind of linking group can be employed, or combinations of linking groups can be employed. In certain embodiments, additional hydrogen atoms of the ethylene recurring unit can be substituted by a pendant silane group or some other pendant group.

Suitable amounts of -Si(OR)₃ groups in the silicon-containing polymer may vary, depending on the type of the polymer and the application. For example, in an embodiment at least 8% of monomeric units of the silicon-containing polymer include an -Si(OR)₃ group.

In other embodiments, the silicon-containing polymer may have at least 10%, 12%, 15%, or 20% of monomeric units having an -Si(OR)₃ group. High content of -Si(OR)₃ groups present in the flocculant composition may increase the flocculation benefit of the flocculant composition.

The water-in-oil emulsion composition is made by forming an aqueous solution that includes the silicon-containing polymer and intermixing the aqueous solution with a surfactant and oil, thus forming a water-in-oil emulsion composition that includes the silicon-containing polymer. The water-in-oil emulsions are oil-continuous with the silicon-containing polymer dissolved in the dispersed aqueous phase.

The aqueous solution including the silicon-containing polymer may be made in a variety of manners. In one embodiment, a polymer backbone is synthesized by solution polymerization and the silicon-containing groups are introduced through a series of reactions in the solution. Alternatively, the silicon-containing polymer may be made in solution wherein a silicon-containing monomer is used to provide polymer bound silicon-containing groups.

For example, in some embodiments the silicon-containing polymers can be made by polymerizing a monomer containing the group -Si(OR)₃ of Formula (I), or by copolymerizing such a monomer with one or more co-monomers. Suitable monomers include, but are not limited to, vinyltriethoxysilane, vinyltrimethoxysilane, allyltriethoxysilane, butenyl-triethoxysilane, γ-N-acrylamidopropyltriethoxysilane, p-triethoxysilylstyrene, 2-(methyl-trimethoxysilyl) acrylic acid, 2-(methyltrimethoxysilyl)-1,4-butadiene, N-triethoxysilylpropyl-maleimide and other reaction products of maleic anhydride and other unsaturated anhydrides with amino compounds containing a -Si(OR)₃ group. The monomers or resulting recurring units can be hydrolyzed by aqueous base, either before or after polymerization. Suitable comonomers include, but are not limited to, vinyl acetate, acrylonitrile, styrene, acrylic acid and it esters, acrylamide and substituted acrylamides such as acrylamidomethylpropanesulfonic acid. The copolymers can also be graft copolymers, such as polyacrylic acid-g-poly(vinyltriethoxysilane) or poly(vinylacetate-co-crotonic acid)-g-poly(vinyltriethoxysilane). These polymers can be made in a variety of solvents such as acetone, tetrahydrofuran, toluene, xylene, and the like. In some cases, the polymer is soluble in the reaction solvent and can be conveniently recovered by stripping off the solvent, or, if the polymer is not soluble in the reaction solvent, the product can be conveniently recovered by filtration; however, any suitable recovery method can be employed. Suitable initiators include 2,2'azobis-(2,4-dimethylvaleronitrile) and 2,2-azobisisobutyronitrile, benzoylperoxide, cumene hydroperoxide, and the like.

In some embodiments the silicon-containing polymers described herein can be made by reacting a compound containing a-Si(OR)₃ group as well as reactive group which can react with either a pendant group or backbone atom of an existing polymer. Polyamines can be reacted with a variety of compounds containing one or more -Si(OR)₃ groups to give polymers which can be used in the preferred embodiments. The reactive group can be an alkyl halide group, such as chloropropyl, bromoethyl, chloromethyl, bromoundecyl, or other suitable group. The compound containing one or more -Si(OR)₃ groups can contain an epoxy functionality such as glycidoxypropyl, 1,2-epoxyamyl, 1,2-epoxydecyl, or 3,4-epoxycyclo-hexylethyl. The reactive group can also be a combination of a hydroxyl group and a halide, such as 3-chloro-2-hydroxypropyl. The reactive moiety can also contain an isocyanate group, such as isocyanatopropyl or isocyanatomethyl, which reacts with an amine group to form a urea linkage or with a hydroxyl group to form a urethane linkage. In addition, silanes containing anhydride groups, such as triethoxysilylpropylsuccinic anhydride, can be used. The reactions can be carried out either neat or in a suitable solvent. In addition, other functional groups such as alkyl groups can added by reacting other amino groups or nitrogen atoms on the polymer with alkyl halides, epoxide or isocyanates. The polyamines can be made by a variety of methods. For example, they can be made by a ring opening polymerization of aziridine or similar compounds. They also can be made by condensation reactions of amines such as ammonia, methylamine, dimethylamine, ethylenediamine, or the like with reactive compounds such as 1,2-dichloroethane, epichlorohydrin, epibromohydrin or similar compounds.

Polymers containing anhydride groups can be reacted with a variety of silicon-containing compounds (e.g., containing one or more -Si(OR)₃ groups) to make embodiments of the silicon-containing polymers described herein. Suitable starting polymers include maleic anhydride homopolymer, and copolymers of maleic anhydride with monomers such as styrene, ethylene, methylvinylether, and the like. The starting polymer can also be a graft copolymer such as poly(1,4-butadiene)-g-maleic anhydride or polyethylene-g-maleic anhydride, or the like. Other suitable anhydride monomers include itaconic and citraconic anhydrides. Suitable reactive silane compounds include but are not limited to γ-aminopropyltriethaxysilane, bis(γ-triethoxysilylpropyl)amine, N-phenyl-γ aminopropyltriethoxysilane, p-aminophenyltriethoxysilane, 3-(m-aminophenoxypropyl)-trimethoxysilane, γ-aminobutyltriethoxylsilane, and the like. Other functional groups can be added to the polymer by reacting it with amines, alcohols, and other compounds.

In one, preferred, embodiment, the silicon-containing polymer comprises recurring units, the recurring units comprising a first recurring unit having a structure -[C(R¹)H-C(R²)H]- and a second recurring unit having a structure -[C(R³)H-C(R⁴)H]-, wherein R¹ , R³ and R⁴ are is -C(=O)OR, and wherein R² is -C(=O)NH-R'-Si(OR)₃ and wherein R is a group I or group II metal ion, preferably Na or K, and R' is an alkylene comprising from 1 to 12 carbon atoms, preferably from 2 to 6 carbon atoms, more preferably propylene. In an embodiment, the amount of the first recurring unit is at least about 5 % , preferably at least about 8 %, by number based on total number of recurring units in the polymer. The polymer can comprise further recurrent units derived from vinyl monomers such as styrene, alkyl vinyl ether and N-vinylpyrrolidone.

In another, preferred, embodiment, the silicon-containing polymer comprises recurring units, the recurring units comprising a first recurring unit having a structure -[C(R¹)H-C(R²)H]-, a second recurring unit having a structure -[C(R³)H-C(R⁴)H]- and a third recurring unit having a structure -[C(R⁵)H-C(R⁶)H]-, wherein R¹, R³, R⁴ and R⁵ are -C(=O)OR, wherein R² is -C(=O)NH-R'-Si(OR)₃, wherein R⁶ is -C(=O)NR"R''' and wherein R is a group I or group II metal ion, preferably Na or K, and R' is an alkylene comprising from 1 to 12 carbon atoms, preferably from 2 to 6 carbon atoms, more preferably propylene, and wherein R" is hydrogen or an alkyl or alkenyl group and R''' is an alkyl or alkenyl group, preferably comprising from 1 to 18 carbon groups. The polymer can comprise further recurrent units derived from vinyl monomers such as styrene, alkyl vinyl ether and N-vinylpyrrolidone, In an embodiment, the amount of the first recurring unit is at least about 5 %, preferably at least about 8 %, and the amount of the third recurring unit is at least about 10 %, by number based on total number of recurring units in the polymer.

Polymers containing hydroxyl groups can be reacted with an epoxy functionality, such as glycidoxypropyltrimethoxysiliane. Examples of polymers that contain hydroxyl groups include polysaccharides such as starch and hydroxyethylcellulose.

In one embodiment, the silicon-containing polymer comprises recurring units, the recurring units comprising a first recurring unit having a structure -[CH₂C(R¹)H]- and a second recurring unit having a structure -[CH₂C(R²)H]-, wherein R¹ is -C(=O)O⁻ or -C(=O)NH₂ or combinations thereof, and wherein R² is -C(=O)NHCH₂CH₂CH₂CH₂Si(O⁻)₃. In an embodiment, the amount of the second recurring unit is at least about 8% e.g., at least about 10%, by number based on total number of recurring units in the polymer.

In another embodiment, the silicon-containing polymer comprises recurring units, the recurring units include optionally from 0 to 50 % of a first recurring unit having a structure -[CH₂C(R¹)H]-, optionally from 0 to 90 % of a second recurring unit having a structure-[CH₂C(R²)H]-, optionally from 0 to 60 % of a third recurring unit having a structure-[CH₂C(R³)H]-, from 8 to 100 % of a fourth recurring unit having a structure-[CH₂C(R⁴)H]-, and optionally from 0 to 30 % of a fifth recurring unit having a structure-[CH₂C(R⁵)H]-, wherein R¹ is C(=O)NH₂, R² is -C(=O)O⁻, R³ is -C(=O)NHO⁻, R⁴ is-NHCH₂CH(OH)CH₂OCH₂CH₂CH₂Si(O⁻)₃, and R⁵ is NH₂. In an embodiment, the silicon-containing polymer comprises up to about 50% by number of the first recurring unit, up to about 90% by number of the second recurring unit, from up to 60% by number of the third recurring unit, from 8% to 50% by number of the fourth recurring unit, and up to 30% by number of the fifth recurring unit.

In another embodiment, the silicon-containing polymer comprises recurring units, the recurring units include a first recurring unit having a structure -[CH₂C(R¹)H]-, a second recurring unit having a structure -[CH₂C(R²)H]-, a third recurring unit having a structure-[CH₂C(R³)H]-, a fourth recurring unit having a structure -[CH₂C(R⁴)H]-, and a fifth recurring unit having a structure -[CH₂C(R⁵)H]-, wherein R¹ is C(=O)NH₂, R² is-C(=O)O⁻, R³ is -C(=O)NHO⁻, R⁴ is -NHC(=O)NHCH₂CH₂CH₂Si(O⁻)₃, and R⁵ is -NH₂. In an embodiment, the first recurring unit and the second recurring unit together comprise about 65% to about 70 % by number of the recurring units, the third recurring unit comprises about 20 to about 30 % by number of the recurring units, and the fourth and fifth recurring units together comprise the remainder of the recurring units.

A further embodiment provides a polymer comprising a recurring unit of the structure (I), optionally a recurring unit of the structure (II), and a recurring unit of the structure (III) 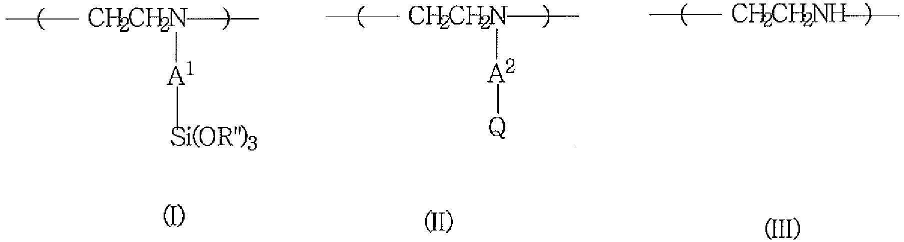 wherein:
Q is H or an optionally substituted hydrocarbyl radical comprising from about 1 to about 20 carbons;
A¹ and A² are each independently a direct bond or an organic connecting group comprising from about 1 to about 20 carbons; and
R" = H, optionally substituted C₁-C₂₀ alkyl, optionally substituted C₆-C₁₂ aryl, optionally substituted C₇-C₂₀ aralkyl, optionally substituted C₂-C₂₀ alkenyl, Group I metal ion, Group II metal ion, or NR¹₄, where each R¹ is independently selected from H, optionally substituted C₁-C₂₀ alkyl, optionally substituted C₆-C₁₂ aryl, optionally substituted C₇-C₂₀ aralkyl, and optionally substituted C₂-C₂₀ alkenyl.

The term "polymer P1" may be used herein to refer to polymers comprising a recurring unit of the structure (I), optionally a recurring unit of the structure (II), and a recurring unit of the structure (III). In an embodiment, the polymer P1 comprises recurring units of the structure (I) in which R" is a Group I mental ion (e.g., Na), a Group (II) metal ion (e.g., K) and/or NR¹₄ (e.g., ammonium). The amounts of recurring unit in the polymer P1 may vary over a broad range. For example, in an embodiment, the polymer P1 comprises at least about 8 mole percent, preferably at least about 15 mole percent of recurring units of the structure (I), based on total moles of recurring units in the polymer P1.

As indicated above, the recurring units of the structures (I) and (II) in the polymer P1 include A¹ and A², which are each independently a direct bond or an organic connecting group comprising from about 1 to about 20 carbons. Examples of suitable organic connecting groups include those in which A¹ and A² are each independently represented by -A³-A⁴-A⁵-, where:
A³ = a direct bond, C=O, optionally substituted C₁-C₁₀ alkylene, or optionally substituted C₆-C₁₂ aryl;
A⁴ = a direct bond, O, NR''', amide, urethane or urea, where R"' is H or C₁₋₃ alkyl; and
A⁵ = a direct bond, O, optionally substituted C₁-C₂₀ alkyl, optionally substituted C₂-C₂₀ alkenyl or optionally substituted C₇-C₂₀ aralkyl.

Examples of organic connecting groups A¹ and A² include -(CH₂)₃- , -CH(OH)-CH₂-,-CH₂-CH(OH)-, -CH(OH)-CH₂-O-, -CH₂-CH(OH)-O-, -CH₂-CH(OH)-CH₂-O-, -CH₂-CH(OH)-CH₂-O-CH₂CH₂CH₂-, -C(=O)-CH(CO₂M)-, -C(=O)-CH(CH₂CO₂M)-, -C(=O)-CH₂-CH(CO₂M)- and -C(=O)-NH-CH₂CH₂CH₂- where M is H, a metal cation such as Na, an ammonium cation such as tetraalkylammonium or NH₄, or an organic group such as optionally substituted C₁-C₂₀ alkyl, optionally substituted C₆-C₁₂aryl, optionally substituted C₇-C₂₀ aralkyl, or optionally substituted C₂-C₂₀ alkenyl. In a preferred embodiment, at least one of the organic connecting groups A¹ and A² is -CH₂-CH(OH)-CH₂-O-CH₂CH₂CH₂-.

Those skilled in the art will appreciate that hydrophobicity in the form of group Q may be optionally incorporated in various ways into the polymer P1. In an embodiment, Q is optionally substituted C₁-C₂₀ alkyl, optionally substituted C₆-C₁₂ aryl, optionally substituted C₇-C₂₀ aralkyl, or optionally substituted C₂-C₂₀ alkenyl. Q is preferably selected from propyl, butyl, pentyl, hexyl, 2-ethylhexyl, octyl, decyl, C₇-C₂₀ alkylphenyl (e.g., cresyl, nonylphenyl), cetyl, octenyl, and octadecyl, In some embodiments, Q is selected from butyl, 2-ethylhexyl, phenyl, cresyl, nonylphenyl, cetyl, octenyl, and octadecyl. In one embodiment, A² is -CH₂-CH(OH)-CH₂-O- and Q is C₈-C₁₀ alkyl. Another embodiment provides a composition comprising a polymeric reaction product of at least a polyethyleneimine, a first nitrogen-reactive compound, and optionally a second nitrogen-reactive compound, the polymeric reaction product having a weight average molecular weight of at least about 500, and preferably at least about 20000, wherein: the first nitrogen-reactive compound comprises a -Si(OR")₃ group and a nitrogen-reactive group, where R" = H, optionally substituted C₁-C₂₀ alkyl, optionally substituted C₆-C₁₂ aryl, optionally substituted C₇-C₂₀ aralkyl, optionally substituted C₂-C₂₀ alkenyl, Group I metal ion, Group II metal ion, or NR¹₄, each R¹ being independently selected from H, optionally substituted C₁-C₂₀ alkyl, optionally substituted C₆-C₁₂ aryl, optionally substituted C₇-C₂₀ aralkyl, and optionally substituted C₂-C₂₀ alkenyl;
the second nitrogen-reactive compound comprises a nitrogen-reactive group and does not contain a Si(OR")₃ group; and comprises an optionally substituted hydrocarbyl radical comprising from about 2 to about 40 carbons. The term "PRP1" may be used herein to refer to such a polymeric reaction product. Either linear or branched polyethyleneimine may be used to make PRP1 wherein the structure of branched polyethyleneimine includes the linkage shown below, as ordinarily understood by one skilled in the art.

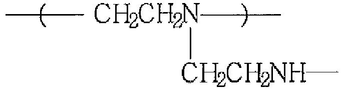

Various Si-containing nitrogen-reactive compounds may be used to make PRP1. Suitable Si-containing nitrogen-reactive compounds comprise a nitrogen-reactive group, e.g., containing suitably configured halide, sulfate, epoxide, isocyanates, anhydride, carboxylic acid, and/or acid chloride functionalities. Examples of suitable nitrogen-reactive groups include alkyl halide (e.g., chloropropyl, bromoethyl, chloromethyl, and bromoundecyl) epoxy (e.g., glycidoxypropyl, 1,2-epoxyamyl, 1,2-epoxydecyl or 3,4-epoxycyclohexylethyl), isocyanate (e.g., isocyanatopropyl or isocyanatomethyl that react to form a urea linkage), anhydride (e.g., malonic anhydride, succinic anhydride) and combinations of such groups, e.g., a combination of a hydroxyl group and a halide, such as 3-chloro-2-hydroxypropyl. Triethoxysilylpropylsuccinic anhydride, glycidoxypropyl trimethoxysilane and chloropropyl trimethoxysilane are examples a nitrogen-reactive compounds that comprise a -Si(OR")₃ group and a nitrogen-reactive group. A variety of such compounds are known to those skilled in the art, see, e.g., U.S. Patent No. 6,814,873, which is hereby incorporated by reference and particularly for the purpose of describing such compounds and methods of incorporating them into polymers.

Various nitrogen-reactive compounds that comprise a nitrogen-reactive group and that do not contain a Si(OR")₃ group may be used to make PRP1. Suitable nitrogen-reactive compounds include those containing one or more of the nitrogen-reactive groups mentioned above. Non-limiting examples of nitrogen-reactive compounds that comprise a nitrogen-reactive group and that do not contain a Si(OR")₃ group include C₁-C₂₀ alkyl halides (e.g., chlorides, bromides, and iodides of alkyls such as methyl, ethyl, propyl, butyl, pentyl, hexyl, and octyl), alkenyl halides such as allyl chloride, aralkyl halides such as benzyl chloride, alkyl sulfates such as dimethyl sulfate, compounds containing at least one epoxide group (e.g., glycidyl alcohols, phenols, and amines), and compounds containing an anhydride group e.g., alkenyl malonic anydrides and/or alkenyl succinic anhydrides. Examples of preferred second nitrogen-reactive compounds include dimethyl sulfate, chlorooctane, chlorohexane, benzyl chloride, epichlorohydrin, glycidyl 4-nonylphenylether, butyl glycidyl ether, 2-ethylhexyl glycidyl ether, phenyl glycidyl ether, C₈-C₁₀ alkyl glycidyl ether, cresyl glycidyl ether, octenylsuccinic anhydride and octadecenylsuccinic anhydride. In some embodiments, the second nitrogen-reactive compound (comprising a nitrogen-reactive group and not containing a Si(OR")₃ group) comprises at least two nitrogen-reactive functionalities, which may be the same or different from one another.

The polymers and compositions described herein can be made in various ways. For example, PRP1 and the polymer P1 may be prepared by reacting together under suitable conditions, in any order, polyethyleneimine, a first nitrogen-reactive compound, and optionally a second nitrogen-reactive compound, as those materials are described above. It will be understood that each of the polyethyleneimine, the first nitrogen-reactive compound, and the second nitrogen-reactive compound may comprise a mixture of particular compounds. Those skilled in the art can identify suitable reaction conditions and prepare a wide variety of polymers and compositions (e.g., PRP1 and the polymer P1), using routine experimentation informed by the guidance provided herein.

Routine experimentation informed by the guidance provided herein may be used to select a silicon-containing polymer that is effective for a particular application, e.g., by selecting a polymer backbone, molecular weight, silicon-containing group and amount thereof to make a polymer that is effective to flocculate suspended solids. For example, routine experimentation informed by the guidance provided herein may be used to configure the polymer so that the silicon-containing group(s) enhances an ability of the silicon-containing polymer to flocculate suspended solids.

Routine experimentation informed by the guidance provided herein may be used to select a silicon-containing polymer having an appropriate molecular weight. For example, the molecular weight of the silicon-containing polymer may vary over a broad range, e.g. from about 1,000 to about 15 million. In some embodiments, the molecular weight of the silicon-containing polymer is about 10,000 or greater, or about 100,000 or greater, e.g., in the range of from about 10,000 to about 10 million, such as about 100,000 to about 5 million. Molecular weights as described herein are weight averages as determined by high pressure size exclusion chromatography (light scattering detection) unless otherwise stated. The silicon-containing polymer may be selected from a silicon-containing polyethyleneimine, a vinyl triethoxysilane copolymer, a copolymer of acrylic acid and triethoxysilylpropylacrylamide, a copolymer of acrylic acid and triethoxyvinylsilane, a silicon-containing polysaccharide (e.g., a silicon-containing starch or a silicon-containing cellulose such as hydroxyethylcellulose), a silicon-containing styrene/maleic anhydride copolymer, a silicon-containing modified styrene-maleic anhydride copolymer, a silicon-containing maleic anhydride/alkyl vinyl ether copolymer (e.g., a silicon-containing maleic anhydride/methyl vinyl ether copolymer), or mixtures thereof and salts and mixtures thereof.

To form the water-in-oil emulsion composition, the aqueous solution including the silicon-containing polymer is intermixed with a surfactant and oil. The term "intermixing" as used herein generally refers to any manner of contacting one substance, such as a composition or solution, with another substance by blending or mixing the substances together with or without physical agitation, *e.g*., mechanical stirring, shaking, homogenizing, and the like. Suitable surfactants (*i.e.,* emulsifiers or emulsifying agents) useful for making the water-in-oil emulsion flocculant compositions are generally commercially available and include those compiled in the North American Edition of McCutcheon's *Emulsifiers & Detergents.* Particularly suitable surfactants for emulsification of the aqueous solution having the silicon-containing polymer are those surfactants that are stable to alkaline hydrolysis, such as, for example, ethoxylated amines and ethoxylated alcohols.

Specific examples of surfactants include, but are not limited to, Lumulse POE(2) (oleyl/amine/ethylene oxide reaction product from Lambent Technologies, Gurnee, IL) and Hypermer A60 (polymeric surfactant available from Croda of Edison, NJ) The oil may be any hydrocarbon oil suitable to form an emulsion, including, but not limited to isoparaffinic, normal, or cyclic hydrocarbons such as benzene, xylene, toluene, fuel oil, kerosene, odorless mineral spirits, and mixtures thereof. A particular example includes Exxsol D-80 oil (available from Exxon Mobil Chemical Companies, Houston TX).

The aqueous solution including the silicon-containing polymer is intermixed with surfactant and oil at amounts and ratios sufficient to form a water-in-oil emulsion. While the weight ratio of the aqueous phase to hydrocarbon phase may vary widely, weight ratios in the range of about 4:1 to about 1:1 are typically suitable.

Those skilled in the art will appreciate that a water-in-oil emulsion composition as described herein may contain additional components. Examples of additional components include water, salts, stabilizers, and pH adjusting agents, as well as ingredients such as DSP and Bayer process red mud.

The water-in-oil emulsion compositions described herein are useful as flocculants. For example, an embodiment provides a flocculation method that includes intermixing a water-in-oil emulsion composition as described herein with a process stream in a process for processing alumina. The water-in-oil composition is intermixed in an amount effective to flocculate at least a portion of solids suspended in the process stream. The suspended solids may include for example, red mud, sodium aluminosilicates, calcium silicates, calcium aluminosilicates, titanium oxides and mixtures thereof. At least a portion of the flocculated suspended solids may be separated from the process stream.

An embodiment provides a method of reducing the level of suspended solids in a process stream whereby a water-in-oil emulsion composition described is added alone, subsequent to, followed by, or in association with a conventional flocculant in order to effectively flocculate the suspended solids so that they can be conveniently separated from the process stream. The amount of reduction in suspended solids content can be measured and compared with controls, which generally comprise state-of-the-art alumina process samples.

The amount of water-in-oil composition(s) effective to flocculate a particular type of solids in a process stream when used alone or in conjunction with a conventional flocculant can be determined by routine experimentation informed by the guidance provided herein. In one example, the water-in-oil emulsion composition is added to the process stream in an amount in the range of from about 0.1 part per million to about 500 parts per million.

The amount of polymer flocculant provided by the water-in-oil emulsion described herein is often in the range of from about 0.01 lb. to about 40 lbs. of flocculant per ton of solids (dry basis), e.g., in various ranges from about 0.1, 0.2, 0.3, 0.4, 0.5, 0.6, 0.7, 0.8, or 0.9 lb. to about 15, 20, 25, 30, or 35 lbs. Those skilled in the art will appreciate that the foregoing provides descriptions of ranges between each of the stated values, and thus will understand, for example, that the water-in-oil composition can be used to provide an amount of flocculant polymer in the range of from about 1 lb. to about 10 lbs. of flocculant per ton of solids (dry basis).

In the context of commercial plant operation, solutions of polymeric flocculant made by addition of the water-in-oil emulsions to aqueous media, or the water-in-oil emulsion compositions themselves can be added to the settler feed. Alternatively, solutions of polymeric flocculant made by addition of the water-in-oil emulsions to aqueous media, or the water-in-oil emulsion compositions themselves can be added to the overflow from a primary settler or to the blow-off from the digesters. The water-in-oil emulsion compositions can also be used in the settling of muds in the mud washing circuit. The water-in-oil emulsion compositions and aqueous solutions made therefrom, alone or in combination with other process chemicals, can advantageously be added at other points in the commercial plant operation as well.

Specific examples of water-in-oil emulsion compositions according to the description herein are outlined in the Examples below. The Examples are not meant to limit the scope of the water-in-oil emulsion compositions described herein. In particular, one skilled in the art would appreciate the nature and amount of inverting surfactant may be varied from what is specified to achieve desired properties such as inversion rate upon addition of the water-in-oil emulsion to aqueous media, and such variation may depend on the specific aqueous composition. It is contemplated that an inverting surfactant may be added to the aqueous media prior to, or along with, the water-in-oil emulsion to affect inversion, as an alternative to its inclusion in the water-in-oil emulsion.

### EXAMPLES

### Example 1: Preparation of a silicon-containing polymer solution (Na⁺ form of silicon-containing polymer)

A reactor was charged with a solution of 14.85g maleic anhydride and 15.15g styrene in toluene. The contents of the reaction were mechanically stirred throughout the process. The solution was deoxygenated over the course of 45min by sparging with nitrogen while heating to 70°C. A deoxygenated solution of 0.45g of lauroyl peroxide in 7.5g toluene was added to initiate polymerization, which is an exothermic reaction, causing the temperature to rise. The reaction was maintained at 73-77°C over the course of 1.5hr by cooling or heating as necessary. After 1.5hr 63.44g toluene was added to the reaction followed by a solution of 0.22g lauroyl peroxide in 3.75g toluene.

The reaction was heated to 100-105°C, held there for 1hr, and then cooled to 50°C. A solution of 10.16g (3-aminopropyl)triethoxysilane and 0.77g dipropylamine in 48.09g toluene was added and the reaction was heated to 100-103°C and held there for 0.5hr. After cooling to 40°C, 386.12g of 4% w/w aqueous sodium hydroxide solution was added dropwise to the reaction. After this addition the temperature was maintained at 40°C for an additional hour to result in a transparent top layer of toluene and a milky bottom aqueous layer. The bottom aqueous layer was separated and then vacuum stripped at 60°C to remove some water and all toluene, to finally produce 282g of an aqueous silicon-containing polymer solution.

### Example 2: Preparation of a silicon-containing polymer solution (K⁺ form of the silicon-containing polymer)

Preparation of the potassium (K+) form of the silicon-containing polymer was conducted as example 1 except that instead of adding the 4% NaOH solution, 309.5g of 7% w/w aqueous potassium hydroxide (KOH) solution was added.

### Example 3: Preparation of an emulsion of the silicon-containing polymer (Na⁺ form of the silicon-containing polymer)

To form an emulsion of the silicon-containing polymer, 70g of the silicon-containing polymer solution from Example 1 was added to a solution of 1.93g Lumulse POE(2) (oleylamine/ethylene oxide reaction product from Lambent Technologies of Gurnee, IL) in 22.75g of Exxsol D-80 oil (from Exxon Mobil Chemical Company, Houston TX) while stirring. A hand-held homogenizer was then placed in the mixture and run on HI (10,000 rpm) for 30sec to form a pourable opaque white water-in-oil emulsion. The homogenizer was of the rotor-stator type, with the product name "BioHomogenizer" available from BioSpec Products of Bartlesville, Oklahoma.
After homogenization, 1.44g of Surfonic N-95 (from Huntsman Performance Products of The Woodlands, Texas) inverting surfactant was added dropwise while mechanically stirring the emulsion at 350rpm to complete the formulation.

### Example 4: Preparation of an emulsion of the silicon-containing polymer (Na⁺ form of the silicon-containing polymer)

To form an emulsion of the silicon-containing polymer, 40g of the silicon-containing polymer solution from Example 1 was added to a solution of 0.86g Hypermer A60 (polymeric surfactant available from Croda of Edison, NJ) in 12.96g of Exxsol D-80 oil (from Exxon Mobil Chemical Company, Houston TX) while stirring.
A hand-held homogenizer was then placed in the mixture and run on HI (10,000 rpm) for 30sec to form a pourable opaque white water-in-oil emulsion. The homogenizer was of the rotor-stator type, with the product name "BioHomogenizer" available from BioSpec Products of Bartlesville, Oklahoma.

### Example 5: Preparation of an emulsion of the silicon-containing polymer (K⁺ form of the silicon-containing polymer)

To form an emulsion of the silicon-containing polymer, 70g of polymer solution from Example 2 was added to a solution of 1.93g Lumulse POE(2) (oleylamine/ethylene oxide reaction product from Lambent Technologies of Gurnee, IL) in 22.75g of Exxsol D-80 oil (from Exxon Mobil Chemical Company, Houston TX) while stirring.
A hand-held homogenizer was then placed in the mixture and run on HI (10,000 rpm) for 30sec to form a pourable opaque white water-in-oil emulsion. The homogenizer was of the rotor-stator type, with the product name "BioHomogenizer" available from BioSpec Products af Bartlesville, Oklahoma.
After homogenization, 1.44g of Surfonic N-95 (from Huntsman Performance Products of The Woodlands, Texas) inverting surfactant was added dropwise while mechanically stirring the emulsion at 350rpm to complete the formulation.

### Example 6: Preparation of a silicon-containing PEI-based polymer solution

A reactor was charged with a solution of 44g Epomin P-1050 (a commercially available 50% by weight aqueous solution of polyethyleneimine PEI from Nippon Shokubai) and 522.8g water. The amount of 64.94g of 50% by weight of aqueous sodium hydroxide solution was slowly added with stirring at a rate such that the temperature did not exceed 40C. Then the amount of 42.24g of 3-glycidyloxypropyltrimethoxysilane was slowly added with stirring at a rate such that the temperature did not exceed 40C. After the addition was complete, the solution was stirred an additional 6hr at room temperature.

### Example 7: Preparation of an emulsion of the silicon-containing PEI-based polymer solution

To form an emulsion of the silicon-containing polymer, 30g of the silicon-containing polymer solution from Example 6 was added to a solution of 0.83g Lumulse POE(2) (oleylamine/ethylene oxide reaction product from Lambent Technologies of Gurnee, IL) in 9.75g of Exxsol D-80 oil (from Exxon Mobil Chemical Company, Houston TX) while stirring. A hand-held homogenizer was then placed in the mixture and run on HI (10,000 rpm) for 30sec to form a pourable opaque white water-in-oil emulsion. The homogenizer is of the rotor-stator type, with the product name "BioHomogenizer" available from BioSpec Products of Bartlesville, Oklahoma.
After homogenization, 0.62g of Surfonic N-95 (from Huntsman Performance Products of The Woodlands, Texas) inverting surfactant was added dropwise while mechanically stirring the emulsion to complete the formulation.
The term "comprising" as used herein is synonymous with "including," "containing," or "characterized by," and is inclusive or open-ended and does not exclude additional, unrecited elements or method steps.
All numbers expressing quantities of ingredients, reaction conditions, and so forth used in the specification and claims are to be understood as being modified in all instances by the term "about." Accordingly, unless indicated to the contrary, the numerical parameters set forth in the specification and attached claims are approximations that may vary depending upon the desired properties sought to be obtained by the present invention. At the very least, and not as an attempt to limit the application of the doctrine of equivalents to the scope of the claims, each numerical parameter should be construed in light of the number of significant digits and ordinary rounding approaches.
The above description discloses several methods and materials of the present invention. This invention is susceptible to modifications in the methods and materials, as well as alterations in the fabrication methods and equipment. Such modifications will become apparent to those skilled in the art from a consideration of this disclosure or practice of the invention disclosed herein.

## Claims

1. A method of making a water-in-oil emulsion composition, the method comprising:
forming an aqueous solution comprising a silicon-containing polymer comprising an - Si(OR)₃ group, wherein R is independently selected from the group consisting of hydrogen, C₁₋₂₀ alkyl, C₂₋₂₀ alkenyl, C₆₋₁₂ aryl, C₇₋₂₀ aralkyl, a group I metal ion, a group II metal ion, and NR'₄⁺; wherein R' is independently selected from the group consisting of hydrogen, C₁₋₂₀ alkyl, C₂₋₂₀ alkenyl, C₆₋₁₂ aryl, and C₇₋₂₀ aralkyl; and wherein R and R' are independently unsubstituted or hydroxy-substituted; and
intermixing the aqueous solution with a surfactant and oil to form a water-in-oil emulsion composition including the silicon-containing polymer.

2. A method according to claim 1, where R is independently selected from the group consisting of Na⁺, K⁺, and NH₄⁺.

3. A method according to claim 1 or 2, wherein the silicon-containing polymer is selected from the group consisting of a silicon-containing polyethyleneimine, a vinyl triethoxysilane copolymer, a copolymer of acrylic acid and triethoxysilylpropylacrylamide, a copolymer of acrylic acid and triethoxyvinylsilane, a silicon-containing polysaccharide, a silicon-containing styrene/maleic anhydride copolymer, a silicon-containing maleic anhydride/alkyl vinyl ether copolymer, and mixtures thereof.

4. A method according to any of claims 1 to 3, wherein the silicon-containing polymer has a weight average molecular weight of about 1,000 or greater.

5. A water-in-oil emulsion composition comprising a silicon-containing polymer comprising an -Si(OR)₃ group, wherein R is independently selected from the group consisting of hydrogen, C₁₋₂₀ alkyl, C₂₋₂₀ alkenyl, C₆₋₁₂ aryl, C₇₋₂₀ aralkyl, a group I metal ion, a group II metal ion, and NR'₄⁺; wherein R' is independently selected from the group consisting of hydrogen, C₁₋₂₀ alkyl, C₂₋₂₀ alkenyl, C₆₋₁₂ aryl, and C₇₋₂₀ aralkyl; and wherein R and R' are independently unsubstituted or hydroxy-substituted, the composition manufactured by intermixing an aqueous solution comprising the silicon-containing polymer with a surfactant and oil to obtain the water-in-oil emulsion composition.

6. A composition according to claim 5, where R is independently selected from the group consisting of Na⁺, K⁺, and NH₄⁺.

7. A composition according to claim 5 or 6, wherein the silicon-containing polymer is selected from the group consisting of a silicon-containing polyethyleneimine, a vinyl triethoxysilane copolymer, a copolymer of acrylic acid and triethoxysilylpropylacrylamide, a copolymer of acrylic acid and triethoxyvinylsilane, a silicon-containing polysaccharide, a silicon-containing styrene/maleic anhydride copolymer, a silicon-containing maleic anhydride/alkyl vinyl ether copolymer, and mixtures thereof

8. A composition according to any of claims 5 to 7, wherein the silicon-containing polymer has a weight average molecular weight of about 1,000 or greater.

9. A flocculation method comprising:
intermixing a polymeric flocculant provided by the water-in-oil emulsion composition according to any of claims 5 to 8 with a process stream in a process for producing alumina, the flocculant polymer intermixed in an amount effective to flocculate at least a portion of solids suspended therein, wherein the suspended solids are selected from a group consisting of red mud, sodium aluminosilicates, calcium silicates, calcium aluminosilicates, titanium oxides and mixtures thereof

10. A method according to claim 9, wherein the flocculant polymer is intermixed with the process stream in an amount in the range of from about 0.1 part per million to about 500 parts per million.

11. A method according to claim 9 or 10, wherein the process stream comprises a suspended red mud.

12. A method according to any of claims 9 to 11, wherein the process for producing alumina is a Bayer process.

13. A method according to any of claims 9 to 11, wherein the process for producing alumina is a Sinter process.

14. A water-in-oil emulsion composition comprising:
a silicon-containing polymer having at least 8% of monomeric units of the silicon-containing polymer include an -Si(OR)₃ group
wherein R is independently selected from the group consisting of hydrogen, C₁₋₂₀ alkyl, C₂₋₂₀ alkenyl, C₆₋₁₂ aryl, C₇₋₂₀ aralkyl, a group I metal ion, a group II metal ion, and NR'₄⁺; wherein R' is independently selected from the group consisting of hydrogen, C₁₋₂₀ alkyl, C₂₋₂₀ alkenyl, C₆₋₁₂ aryl, and C₇₋₂₀ aralkyl; and wherein R and R' are unsubstituted or hydroxy-substituted.

15. A composition according to claim 14, where R is independently selected from the group consisting of Na⁺, K⁺, and NH₄⁺.

16. A composition according to claim 14 or 15, wherein the silicon-containing polymer is selected from the group consisting of a silicon-containing polyethyleneimine, a vinyl triethoxysilane copolymer, a copolymer of acrylic acid and triethoxysilylpropylacrylamide, a copolymer of acrylic acid and triethoxyvinylsilane, a silicon-containing polysaccharide, a silicon-containing styrene/maleic anhydride copolymer, a silicon-containing maleic anhydride/alkyl vinyl ether copolymer, and mixtures thereof.

## Patentansprüche

1. Verfahren zur Herstellung einer Wasser-in-Öl-Emulsionszusammensetzung, wobei das Verfahren Folgendes umfasst:
Bilden einer wässrigen Lösung, die ein siliciumhaltiges Polymer mit einer -Si(OR)₃-Gruppe umfasst, wobei R unabhängig aus der Gruppe bestehend aus Wasserstoff, C₁₋₂₀-Alkyl, C₂₋₂₀-Alkenyl, C₆₋₁₂-Aryl, C₇₋₂₀-Aralkyl, einem Gruppe-I-Metallion, einem Gruppe-II-Metallion und NR'₄⁺ ausgewählt ist; wobei R' unabhängig aus der Gruppe bestehend aus Wasserstoff, C₁₋₂₀-Alkyl, C₂₋₂₀-Alkenyl, C₆₋₁₂-Aryl und C₇₋₂₀-Aralkyl ausgewählt ist und wobei R und R' unabhängig unsubstituiert oder hydroxysubstituiert sind; und
Vermischen der wässrigen Lösung mit einem Tensid und Öl zur Bildung einer Wasser-in-Öl-Emulsions zusammensetzung, die das siliciumhaltige Polymer enthält.

2. Verfahren nach Anspruch 1, wobei R unabhängig aus der Gruppe bestehend aus Na⁺, K⁺ und NH₄⁺ ausgewählt ist.

3. Verfahren nach Anspruch 1 oder 2, wobei das siliciumhaltige Polymer aus der Gruppe bestehend aus einem siliciumhaltigen Polyethylenimin, einem Vinyltriethoxysilan-Copolymer, einem Copolymer von Acrylsäure und Triethoxysilylpropylacrylamid, einem Copolymer von Acrylsäure und Triethoxyvinylsilan, einem siliciumhaltigen Polysaccharid, einem siliciumhaltigen Styrol/Maleinsäureanhydrid-Copolymer, einem siliciumhaltigen Maleinsäureanhydrid/Alkylvinylether-Copolymer und Mischungen davon ausgewählt ist.

4. Verfahren nach einem der Ansprüche 1 bis 3, wobei das siliciumhaltige Polymer ein gewichtsmittleres Molekulargewicht von etwa 1000 oder mehr aufweist.

5. Wasser-in-Öl-Emulsionszusammensetzung, umfassend ein siliciumhaltiges Polymer mit einer -Si(OR)₃-Gruppe, wobei R unabhängig aus der Gruppe bestehend aus Wasserstoff, C₁₋₂₀-Alkyl, C₂₋₂₀-Alkenyl, C₆-₁₂-Aryl, C₇₋₂₀-Aralkyl, einem Gruppe-I-Metallion, einem Gruppe-II-Metallion und NR'₄⁺ ausgewählt ist; wobei R' unabhängig aus der Gruppe bestehend aus Wasserstoff, C₁₋₂₀-Alkyl, C₂₋₂₀-Alkenyl, C₆₋₁₂-Aryl und C₇₋₂₀-Aralkyl ausgewählt ist und wobei R und R' unabhängig unsubstituiert oder hydroxysubstituiert sind, wobei die Zusammensetzung durch Vermischen einer wässrigen Lösung, die das siliciumhaltige Polymer umfasst, mit einem Tensid und Öl zum Erhalt der Wasser-in-Öl-Emulsions zusammensetzung hergestellt wurde.

6. Zusammensetzung nach Anspruch 5, wobei R unabhängig aus der Gruppe bestehend aus Na⁺, K⁺ und NH₄⁺ ausgewählt ist.

7. Zusammensetzung nach Anspruch 5 oder 6, wobei das siliciumhaltige Polymer aus der Gruppe bestehend aus einem siliciumhaltigen Polyethylenimin, einem Vinyltriethoxysilan-Copolymer, einem Copolymer von Acrylsäure und Triethoxysilylpropylacrylamid, einem Copolymer von Acrylsäure und Triethoxyvinylsilan, einem siliciumhaltigen Polysaccharid, einem siliciumhaltigen Styrol/Maleinsäureanhydrid-Copolymer, einem siliciumhaltigen Maleinsäureanhydrid/Alkylvinylether-Copolymer und Mischungen davon ausgewählt ist.

8. Zusammensetzung nach einem der Ansprüche 5 bis 7, wobei das siliciumhaltige Polymer ein gewichtsmittleres Molekulargewicht von etwa 1000 oder mehr aufweist.

9. Ausflockungsverfahren, das Folgendes umfasst:
Vermischen eines durch die Wasser-in-Öl-Emulsions zusammensetzung nach einem der Ansprüche 5 bis 8 bereitgestellten polymeren Ausflockungsmittels mit einem Prozessstrom bei einem Verfahren zur Herstellung von Aluminiumoxid, wobei das Ausflockungs mittelpolymer in einer zum Ausflocken von mindestens einem Teil darin suspendierter Feststoffe wirksamen Menge vermischt wird, wobei die suspendierten Feststoffe aus der Gruppe bestehend aus Rotschlamm, Natriumaluminosilikaten, Calcium silikaten, Calciumaluminosilikaten, Titanoxiden und Mischungen davon ausgewählt sind.

10. Verfahren nach Anspruch 9, wobei das Ausflockungsmittelpolymer in einer Menge im Bereich von etwa 0,1 Teilen pro Million bis etwa 500 Teilen pro Million mit dem Prozessstrom vermischt wird.

11. Verfahren nach Anspruch 9 oder 10, wobei der Prozessstrom einen suspendierten Rotschlamm umfasst.

12. Verfahren nach einem der Ansprüche 9 bis 11, wobei es sich bei dem Verfahren zur Herstellung von Aluminiumoxid um ein Bayer-Verfahren handelt.

13. Verfahren nach einem der Ansprüche 9 bis 11, wobei es sich bei dem Verfahren zur Herstellung von Aluminiumoxid um ein Sinter-Verfahren handelt.

14. Wasser-in-Öl-Emulsionszusammensetzung, umfassend:
ein siliciumhaltiges Polymer, wobei mindestens 8 % Monomereinheiten des siliciumhaltigen Polymers eine -Si(OR)₃-Gruppe enthalten,
wobei R unabhängig aus der Gruppe bestehend aus Wasserstoff, C₁₋₂₀-Alkyl, C₂₋₂₀-Alkenyl, C₆₋₁₂-Aryl, C₇₋₂₀-Aralkyl, einem Gruppe-I-Metallion, einem Gruppe-II-Metallion und NR'₄⁺ ausgewählt ist; wobei R' unabhängig aus der Gruppe bestehend aus Wasserstoff, C₁₋₂₀-Alkyl, C₂₋₂₀-Alkenyl, C₆₋₁₂-Aryl und C₇₋₂₀-Aralkyl ausgewählt ist und wobei R und R' unabhängig unsubstituiert oder hydroxysubstituiert sind.

15. Zusammensetzung nach Anspruch 14, wobei R unabhängig aus der Gruppe bestehend aus Na⁺, K⁺ und NH₄⁺ ausgewählt ist.

16. Zusammensetzung nach Anspruch 14 oder 15, wobei das siliciumhaltige Polymer aus der Gruppe bestehend aus einem siliciumhaltigen Polyethylenimin, einem Vinyltriethoxysilan-Copolymer, einem Copolymer von Acrylsäure und Triethoxysilylpropylacrylamid, einem Copolymer von Acrylsäure und Triethoxyvinylsilan, einem siliciumhaltigen Polysaccharid, einem siliciumhaltigen Styrol/Maleinsäureanhydrid-Copolymer, einem siliciumhaltigen Maleinsäureanhydrid/Alkylvinylether-Copolymer und Mischungen davon ausgewählt ist.

## Revendications

1. Procédé de fabrication d'une composition d'émulsion eau dans huile, le procédé comprenant : la formation d'une solution aqueuse comprenant un polymère contenant du silicium comprenant un groupe -Si(OR)₃, dans lequel R est indépendamment choisi dans le groupe constitué d'hydrogène, alkyle en C₁₋₂₀, alcényle en C₂₋₂₀, aryle en C₆₋₁₂ et aralkyle en C₇₋₂₀, un ion métallique du groupe I, un ion métallique du groupe II, et NR'₄⁺ ; dans lequel R' est indépendamment choisi dans le groupe constitué d'hydrogène, alkyle en C₁₋₂₀, alcényle en C₂₋₂₀, aryle en C₆₋₁₂ et aralkyle en C₇₋₂₀ ; et où R et R' sont indépendamment non substitués ou hydroxy-substitués ; et
le mélange de la solution aqueuse avec un tensioactif et une huile pour former une composition d'émulsion eau dans huile comprenant le polymère contenant du silicium.

2. Procédé selon la revendication 1, dans lequel R est indépendamment choisi dans le groupe constitué de Na⁺, K⁺ et NH₄⁺.

3. Procédé selon la revendication 1 ou 2, dans lequel le polymère contenant du silicium est choisi dans le groupe constitué d'une polyéthylénimine contenant du silicium, un copolymère de vinyl-triéthoxysilane, un copolymère d'acide acrylique et de triéthoxysilylpropylacrylamide, un copolymère d'acide acrylique et de triéthoxyvinylsilane, un polysaccharide contenant du silicium, un copolymère de styrène/anhydride maléique contenant du silicium, un copolymère d'anhydride maléique/éther alkylvinylique contenant du silicium, et des mélanges de ceux-ci.

4. Procédé selon l'une quelconque des revendications 1 à 3, dans lequel le polymère contenant du silicium a un poids moléculaire moyen en poids d'environ 1 000 ou plus.

5. Composition d'émulsion eau dans huile comprenant un polymère contenant du silicium comprenant un groupe -Si(OR)₃, dans lequel R est indépendamment choisi dans le groupe constitué d'hydrogène, alkyle en C₁₋₂₀, alcényle en C₂₋₂₀, aryle en C₆₋₁₂ et aralkyle en C₇₋₂₀, un ion métallique du groupe I, un ion métallique du groupe II, et NR'₄ ; dans lequel R' est indépendamment choisi dans le groupe constitué d'hydrogène, alkyle en C₁₋₂₀, alcényle en C₂₋₂₀, aryle en C₆₋₁₂ et aralkyle en C₇₋₂₀ ; et où R et R' sont indépendamment non substitués ou hydroxy-substitués, la composition étant fabriquée par mélange d'une solution aqueuse comprenant le polymère contenant du silicium avec un tensioactif et une huile pour obtenir la composition d'émulsion eau dans huile.

6. Composition selon la revendication 5, dans laquelle R est indépendamment choisi dans le groupe constitué de Na⁺, K⁺ et NH₄⁺.

7. Composition selon la revendication 5 ou 6, dans laquelle le polymère contenant du silicium est choisi dans le groupe constitué d'une polyéthylénimine contenant du silicium, un copolymère de vinyl-triéthoxysilane, un copolymère d'acide acrylique et de triéthoxysilylpropylacrylamide, un copolymère d'acide acrylique et de triéthoxyvinylsilane, un polysaccharide contenant du silicium, un copolymère de styrène/anhydride maléique contenant du silicium, un copolymère d'anhydride maléique/éther alkylvinylique contenant du silicium, et des mélanges de ceux-ci.

8. Composition selon l'une quelconque des revendications 5 à 7, dans laquelle le polymère contenant du silicium a un poids moléculaire moyen en poids d'environ 1 000 ou plus.

9. Procédé de floculation comprenant :
mélange d'un floculant polymère produit par la composition d'émulsion eau dans huile selon l'une quelconque des revendications 5 à 8 avec un flux de traitement dans un procédé de production d'alumine, le polymère de floculant étant mélangé en une quantité efficace pour floculer au moins une partie de matières solides mises en suspension dans celle-ci, les matières solides en suspension étant choisies dans un groupe constitué de boue rouge, aluminosilicates de sodium, silicates de calcium, aluminosilicates de calcium, oxydes de titane et des mélanges de ceux-ci.

10. Procédé selon la revendication 9, dans lequel le polymère floculant est mélangé avec le flux de traitement en une quantité dans la plage d'environ 0,1 partie par million à environ 500 parties par million.

11. Procédé selon la revendication 9 ou 10, dans lequel le flux de traitement comprend une boue rouge en suspension.

12. Procédé selon l'une quelconque des revendications 9 à 11, dans lequel le procédé de production d'alumine est un procédé Bayer.

13. Procédé selon l'une quelconque des revendications 9 à 11, dans lequel le procédé de production d'alumine est un procédé de frittage.

14. Composition d'émulsion eau dans huile comprenant :
un polymère contenant du silicium ayant au moins 8 % de motifs monomères du polymère contenant du silicium comprennent un groupe -Si(OR)₃
dans laquelle R est indépendamment choisi dans le groupe constitué d'hydrogène, alkyle en C₁₋₂₀, alcényle en C₂₋₂₀, aryle en C₆₋₁₂ et aralkyle en C₇₋₂₀, un ion métallique du groupe I, un ion métallique du groupe II, et NR'₄ ; dans lequel R' est indépendamment choisi dans le groupe constitué d'hydrogène, alkyle en C₁₋₂₀, alcényle en C₂₋₂₀, aryle en C₆₋₁₂ et aralkyle en C₇₋₂₀ ; et dans laquelle R et R' sont non substitués ou hydroxy-substitués.

15. Composition selon la revendication 14, dans laquelle R est indépendamment choisi dans le groupe constitué de Na⁺, K⁺ et NH₄⁺.

16. Composition selon la revendication 14 ou 15, dans laquelle le polymère contenant du silicium est choisi dans le groupe constitué d'une polyéthylénimine contenant du silicium, un copolymère de vinyl-triéthoxysilane, un copolymère d'acide acrylique et de triéthoxysilylpropylacrylamide, un copolymère d'acide acrylique et de triéthoxyvinylsilane, un polysaccharide contenant du silicium, un copolymère de styrène/anhydride maléique contenant du silicium, un copolymère d'anhydride maléique/éther alkylvinylique contenant du silicium, et des mélanges de ceux-ci.
